# EUROPEAN PATENT APPLICATION

(11) **EP 4 503 212 A1**
(43) Date of publication of application: **05.02.2025**
(21) Application number: 23779658.6
(22) Date of filing: 16.03.2023
(51) Int. Cl.: H01M 8/18

(54) **REDOX FLOW BATTERY**

(30) Priority: 31.03.2022 JP 2022058258
(71) Applicant: Tohoku University, Sendai-shi, Miyagi 980-8577 (JP)
(72) Inventor: ZHU, Hongmin, Sendai-shi, Miyagi 980-8577 (JP); TAKEDA, Osamu, Sendai-shi, Miyagi 980-8577 (JP); WANG, Qi, Sendai-shi, Miyagi 980-8577 (JP); LU, Xin, Sendai-shi, Miyagi 980-8577 (JP)
(74) Representative: Plasseraud IP
(86) International application number: PCT/JP2023/010238
(87) International publication number: WO 2023/189640

(57) **Abstract**

A redox flow battery (100) that is charged and discharged by supply of a positive electrode electrolyte and a negative electrode electrolyte to a battery cell including a positive electrode (104), a negative electrode (105), and a diaphragm (101) interposed between the positive electrode (104) and the negative electrode (105), wherein the positive electrode electrolyte and the negative electrode electrolyte are molten salts, the positive electrode electrolyte contains a trivalent titanium ion and a tetravalent titanium ion, and the negative electrode electrolyte contains a divalent titanium ion and a trivalent titanium ion.

## Description

### Technical Field

The present invention relates to a redox flow battery.

The present application claims priority on the basis of Japanese Patent Application No. 2022-058258 filed in Japan on March 31, 2022, the content of which is incorporated herein by reference.

### Background Art

Currently, introduction of renewable energy is rapidly accelerated. Meanwhile, there has been an issue regarding how to store and release electricity generated from renewable energy. An example of known techniques for storing and releasing electricity includes a vanadium ion redox flow battery utilizing an electrode reaction of vanadium ions (see, for example, Patent Document 1).

### Citation List

### Patent Document

Patent Document 1: WO 2011/111717

### Summary of Invention

### Technical Problem

However, the vanadium ion redox flow battery uses an aqueous solution as an electrolyte. Therefore, there has been a disadvantage that an active material has low solubility in the electrolyte and the current density that can be extracted from the battery is low.

The present invention has been made in view of the above-mentioned circumstances, and an object thereof is to provide a redox flow battery from which a high current density can be extracted.

### Solution to Problem

To solve the above-mentioned issue, the present invention has the following aspects.
[1] A redox flow battery that is charged and discharged by supply of a positive electrode electrolyte and a negative electrode electrolyte to a battery cell including a positive electrode, a negative electrode, and a diaphragm interposed between the positive electrode and the negative electrode, wherein:
   the positive electrode electrolyte and the negative electrode electrolyte are molten salts,
   the positive electrode electrolyte contains a trivalent titanium ion and a tetravalent titanium ion, and
   the negative electrode electrolyte contains a divalent titanium ion and a trivalent titanium ion.
[2] The redox flow battery according to [1], wherein each of the molten salts is a molten salt of lithium chloride and potassium chloride, a molten salt of sodium chloride and potassium chloride, a molten salt of magnesium chloride, sodium chloride, and potassium chloride, or a molten salt of lithium fluoride, sodium fluoride, and potassium fluoride.

### Advantageous Effects of Invention

According to the present invention, it is possible to provide a redox flow battery from which a high current density can be extracted.

### Brief Description of Drawings

FIG. 1 is a schematic view illustrating a redox flow battery according to an embodiment of the present invention.
FIG. 2 is a diagram showing a cyclic voltammogram in Example 1.
FIG. 3 is a diagram showing a square wave voltammogram in Example 1.
FIG. 4 is a diagram showing a cyclic voltammogram in Example 2.
FIG. 5 is a diagram showing a square wave voltammogram in Example 2.
FIG. 6 is a diagram showing charge-discharge curves in Example 3.
FIG. 7 is a diagram showing charge-discharge curves in Example 4.
FIG. 8 is a diagram showing charge-discharge curves in Example 5.
FIG. 9 is a diagram showing charge-discharge curves in Comparative Example.
FIG. 10 is a diagram showing charge-discharge curves in Example 6.
FIG. 11 is a diagram showing charge-discharge curves in Example 7.
FIG. 12 is a diagram showing charge-discharge curves in Example 8.

### Description of Embodiment

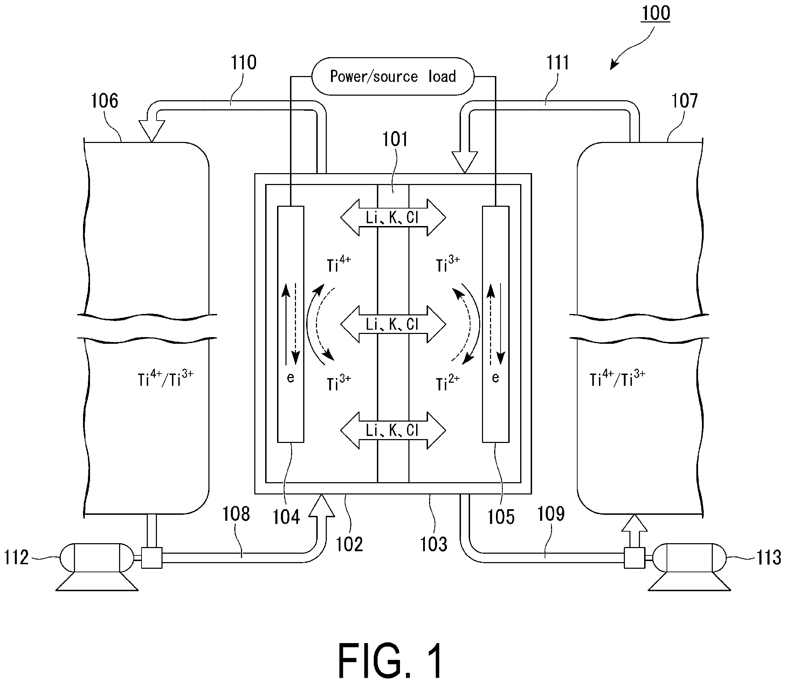

Hereinafter, with reference to FIG. 1, a redox flow battery according to the present invention is described by way of an embodiment. However, the present invention is not limited to the embodiment described below.

A word "to" indicating a numerical range means that numerical values described before and after the word "to" are included in the numerical range as a lower limit and an upper limit.

### Redox Flow Battery

FIG. 1 is a schematic view showing a redox flow battery according to an embodiment of the present invention.

As shown in FIG. 1, a redox flow battery 100 is connected to a power generation unit and a load such as a power system or a consumer typically via an AC/DC converter, and is charged using the power generation unit as a power source and discharged using the load as a power supply target. Examples of the power generation unit include a solar power generator and a wind power generator as well as a general power plant. In order to perform the above-mentioned charge and discharge, a battery system described below, which includes the redox flow battery 100 and a circulation mechanism for circulating an electrolyte in the redox flow battery 100, is constructed. Examples of the circulation mechanism include a tank, a pipe, and a pump.

The redox flow battery 100 includes a positive electrode cell 102 containing a positive electrode 104, a negative electrode cell 103 containing a negative electrode 105, and a diaphragm 101 that separates the positive electrode cell 102 and the negative electrode cell 103 and allows ions to permeate therethrough as appropriate. To the positive electrode cell 102, a positive electrode electrolyte tank 106 is connected via pipes 108 and 110. To the negative electrode cell 103, a negative electrode electrolyte tank 107 is connected via pipes 109 and 111. The pipe 108 is provided with a pump 112 for circulating the positive electrode electrolyte. The pipe 109 is provided with a pump 113 for circulating the negative electrode electrolyte.

In the redox flow battery 100, the positive electrode electrolyte in the positive electrode electrolyte tank 106 is circulated and supplied to the positive electrode cell 102 (positive electrode 104) using the pipes 108 and 110 and the pump 112, and the negative electrode electrolyte in the negative electrode electrolyte tank 107 is circulated and supplied to the negative electrode cell 103 (negative electrode 105) using the pipes 109 and 111 and the pump 113. As a result, the redox flow battery 100 is charged and discharged in accordance with a valence change reaction of metal ions serving as an active material in the positive electrode electrolyte in the positive electrode cell 102 and a valence change reaction of metal ions serving as an active material in the negative electrode electrolyte in the negative electrode cell 103.

Examples of the diaphragm 101 include a porous material made of magnesium oxide (MgO). Alternatively, glass fibers having a high void ratio may be used as the diaphragm 101. As described later, in the redox flow battery 100, the positive electrode electrolyte contains trivalent titanium ions (Ti³⁺) and tetravalent titanium ions (Ti⁴⁺) as active materials, and the negative electrode electrolyte contains divalent titanium ions (Ti²⁺) and trivalent titanium ions (Ti³⁺) as active materials. Therefore, the redox flow battery 100 normally functions as a battery even when it includes a diaphragm that has a large surface roughness and allows a substance to easily move physically. In addition, the redox flow battery 100 functions as a battery even if the positive electrode electrolyte and the negative electrode electrolyte permeate through the diaphragm 101 and are mixed to some extent. Therefore, it can be said that the redox flow battery 100 is resistant to cross-contamination. That is, the redox flow battery 100 has excellent resilience against cross-contamination. It is considered that such a feature of excellent resilience becomes more advantageous as the power storage scale increases.

Examples of the positive electrode 104 and the negative electrode 105 include electrodes made of carbon materials such as graphite, fullerene, and carbon nanotubes.

The positive electrode electrolyte and the negative electrode electrolyte are molten salts. The molten salts are not particularly limited as long as they have a low melting point, but are each preferably a molten salt of lithium chloride and potassium chloride (LiCl-KCl) (melting point: from 350°C to 500°C), a molten salt of sodium chloride and potassium chloride (NaCl-KCl) (melting point: from 700°C to 750°C), a molten salt of magnesium chloride, sodium chloride, and potassium chloride (MgCl₂-NaCl-KCl) (melting point: from 400°C to 500°C), a molten salt of lithium fluoride, sodium fluoride, and potassium fluoride (LiF-NaF-KF) (melting point: from 460°C to 600°C), or a molten salt of lithium chloride, potassium chloride, and cesium chloride (LiCl-KCl-CsCl) (melting point: from 270°C to 400°C).

In the molten salt of lithium chloride and potassium chloride (LiCl-KCl), the mixing ratio between lithium chloride and potassium chloride is preferably from 4:6 to 6:4 in terms of molar ratio. When the mixing ratio between lithium chloride and potassium chloride is within the above range, the positive electrode electrolyte and the negative electrode electrolyte can dissolve a predetermined amount of titanium ions described later.

In the molten salt of sodium chloride and potassium chloride (NaCl-KCl), the mixing ratio between sodium chloride and potassium chloride is preferably from 4:6 to 6:4 in terms of molar ratio. When the mixing ratio between sodium chloride and potassium chloride is within the above range, the positive electrode electrolyte and the negative electrode electrolyte can dissolve a predetermined amount of titanium ions described later.

In the molten salt of magnesium chloride, sodium chloride, and potassium chloride (MgCl₂-NaCl-KCl), the mixing ratio between magnesium chloride, sodium chloride, and potassium chloride is preferably from 6:2:2 to 4:3:3 in molar ratio. When the mixing ratio between magnesium chloride, sodium chloride, and potassium chloride is within the above range, the positive electrode electrolyte and the negative electrode electrolyte can dissolve a predetermined amount of titanium ions described later.

In the molten salt of lithium fluoride, sodium fluoride, and potassium fluoride (LiF-NaF-KF), the mixing ratio between lithium fluoride, sodium fluoride, and potassium fluoride is preferably from 5:1:4 to 4:1:5 in terms of molar ratio. When the mixing ratio between lithium fluoride, sodium fluoride, and potassium fluoride is within the above range, the positive electrode electrolyte and the negative electrode electrolyte can dissolve a predetermined amount of titanium ions described later.

In the molten salt of lithium chloride, potassium chloride, and cesium chloride (LiCl-KCl-CsCl), the mixing ratio between lithium chloride, potassium chloride, and cesium chloride is preferably from 5:2:3 to 6:2:2 in terms of molar ratio. When the mixing ratio between lithium chloride, potassium chloride, and cesium chloride is within the above range, the positive electrode electrolyte and the negative electrode electrolyte can dissolve a predetermined amount of titanium ions described later.

The positive electrode electrolyte contains trivalent titanium ions (Ti³⁺) and tetravalent titanium ions (Ti⁴⁺) as active materials. The trivalent titanium ions (Ti³⁺) and the tetravalent titanium ions (Ti⁴⁺) originate from, for example, titanium(III) chloride (TiCl₃) dissolved in the positive electrode electrolyte. Fluoride ions (F⁻) may be introduced into the electrolyte.

The content of trivalent titanium ions (Ti³⁺) in the positive electrode electrolyte is preferably from 0.5 mol/L to 8 mol/L, more preferably from 1 mol/L to 6 mol/L, and still more preferably from 2 mol/L to 5 mol/L. If the content of trivalent titanium ions (Ti³⁺) in the positive electrode electrolyte is less than the lower limit, the battery cannot be sufficiently charged. If the content of trivalent titanium ions (Ti³⁺) in the positive electrode electrolyte exceeds the upper limit, the titanium halide does not completely dissolve in the molten salt and precipitates.

The content of tetravalent titanium ions (Ti⁴⁺) in the positive electrode electrolyte is preferably from 0.5 mol/L to 8 mol/L, more preferably from 1 mol/L to 6 mol/L, and still more preferably from 2 mol/L to 5 mol/L. If the content of tetravalent titanium ions (Ti⁴⁺) in the positive electrode electrolyte is less than the lower limit, the current density that can be extracted at the time of discharge is low. If the content of tetravalent titanium ions (Ti⁴⁺) in the positive electrode electrolyte exceeds the upper limit, the titanium halide does not completely dissolve in the molten salt, resulting in evaporation loss.

The content of trivalent titanium ions (Ti³⁺) and the content of tetravalent titanium ions (Ti⁴⁺) in the positive electrode electrolyte may be equal to or different from each other.

The negative electrode electrolyte contains divalent titanium ions (Ti²⁺) and trivalent titanium ions (Ti³⁺) as active materials. The divalent titanium ions (Ti²⁺) and the trivalent titanium ions (Ti³⁺) originate from, for example, titanium(III) chloride (TiCl₃) dissolved in the negative electrode electrolyte. Fluoride ions (F⁻) may be introduced into the electrolyte.

The content of divalent titanium ions (Ti²⁺) in the negative electrode electrolyte is preferably from 0.5 mol/L to 8 mol/L, more preferably from 1 mol/L to 6 mol/L, and still more preferably from 2 mol/L to 5 mol/L. If the content of divalent titanium ions (Ti²⁺) in the negative electrode electrolyte is less than the lower limit, the current density that can be extracted at the time of discharge is low. If the content of divalent titanium ions (Ti²⁺) in the negative electrode electrolyte exceeds the upper limit, the titanium halide does not completely dissolve in the molten salt and precipitates.

The content of trivalent titanium ions (Ti³⁺) in the negative electrode electrolyte is preferably from 0.5 mol/L to 8 mol/L, more preferably from 1 mol/L to 6 mol/L, and still more preferably from 2 mol/L to 5 mol/L. If the content of trivalent titanium ions (Ti³⁺) in the negative electrode electrolyte is less than the lower limit, the battery cannot be sufficiently charged. If the content of trivalent titanium ions (Ti³⁺) in the negative electrode electrolyte exceeds the upper limit, the titanium halide does not completely dissolve in the molten salt and precipitates.

The content of divalent titanium ions (Ti²⁺) and the content of trivalent titanium ions (Ti³⁺) in the negative electrode electrolyte may be equal to or different from each other.

In the redox flow battery 100, an electron reaction represented by the following formula (1) occurs at the positive electrode. The potential of the positive electrode is -0.3 V *vs.* Cl₂/Cl⁻due to this electron reaction.

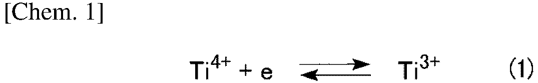

In the redox flow battery 100, an electron reaction represented by the following formula (2) occurs at the negative electrode. The potential of the negative electrode is -2.1 V *vs.* Cl₂/Cl⁻due to this electron reaction.

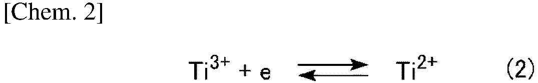

The redox flow battery 100 generates an electromotive force by the occurrence of the electron reaction at the positive electrode and the electron reaction at the negative electrode described above. The electromotive force of the redox flow battery 100 corresponds to a potential difference between the potential of the positive electrode (-0.3 V vs. Cl₂/Cl⁻) and the potential of the negative electrode (-2.1 V *vs.* Cl₂/Cl⁻), and is 1.8 V. Since the electromotive force of the known vanadium ion redox flow battery is 1.4 V, the electromotive force of the redox flow battery 100 is about 29% higher than that of the vanadium ion redox flow battery.

In order for the redox flow battery 100 to generate an electromotive force, it is necessary to heat the molten salt in the positive electrode cell 102 and the molten salt in the negative electrode cell 103 to a temperature equal to or higher than the above-mentioned melting points of molten salts. After the electron reaction at the positive electrode and the electron reaction at the negative electrode as described above start, the molten salts can be maintained at a temperature equal to or higher than the melting points by the heat of such reactions, so that heating of the molten salts is unnecessary. In order to maintain the molten salts at a temperature equal to or higher than the melting points, it is preferable to provide a heat insulating material on the outer periphery of the positive electrode cell 102 and the negative electrode cell 103.

In the redox flow battery 100, since the positive electrode electrolyte and the negative electrode electrolyte are molten salts, the concentrations of divalent titanium ions (Ti²⁺), trivalent titanium ions (Ti³⁺), and tetravalent titanium ions (Ti⁴⁺) in the positive electrode electrolyte and the negative electrode electrolyte can be increased. As a result, a high current density can be extracted. In other words, the redox flow battery 100 can achieve a high current density (rapid charge and large output) at the time of charge and discharge. In addition, since the positive electrode electrolyte and the negative electrode electrolyte are molten salts, the redox flow battery 100 is not constrained by decomposition of water, and has a higher electromotive force than that of a vanadium ion redox flow battery.

In addition, since the redox flow battery 100 has a higher electromotive force than that of the vanadium ion redox flow battery, it is possible to reduce the number of stacked battery cells, significantly reduce the cost of active materials (divalent titanium ions (Ti²⁺), trivalent titanium ions (Ti³⁺), and tetravalent titanium ions (Ti⁴⁺)) supplied to the positive electrode cell 102 and the negative electrode cell 103, and increase the space utilization efficiency.

Although the embodiment of the present invention has been described above, the present invention is not limited to the above-mentioned embodiment, and various modifications can be made.

### Examples

Hereinafter, advantageous effects of the present invention are made more apparent with reference to examples. Note that the present invention is not limited to the following examples, and can be carried out with appropriate modifications without changing the gist of the invention.

### Example 1

### Measurement of cyclic voltammetry

A LiCl-KCl molten salt containing 0.3 mol/L of TiCl₃ was placed in an electrode cell.

A graphite electrode was used as a working electrode, an Ag⁺/Ag electrode was used as a reference electrode, and a graphite electrode was used as a counter electrode.

The working electrode, the reference electrode, and the counter electrode were connected to a potentiostat device, the working electrode, the reference electrode, and the counter electrode were immersed in the LiCl-KCl molten salt containing TiCl₃, the potential was increased and decreased at a sweep rate of 200 mV/s or 400 mV/s, and the current value was measured.

The temperature of the LiCl-KCl molten salt containing TiCl₃ during the measurement was set to 450°C.

In this measurement, the electron reaction represented by the formula (1) occurs.

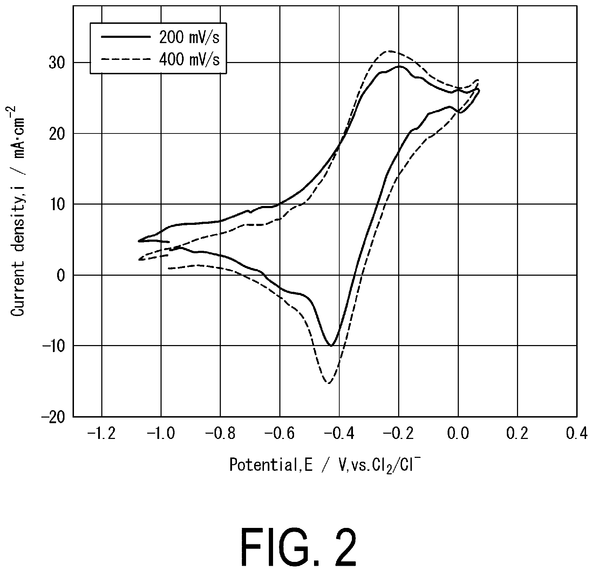

FIG. 2 shows the resulting cyclic voltammogram.

### Measurement of square wave voltammetry

The potential was swept in a square wave form at the working electrode to measure the response current, and the electrode reaction occurring was analyzed on the basis of the potential and the current.

The temperature of the LiCl-KCl molten salt containing TiCl₃ during the measurement was set to 450°C.

In this measurement, the electron reaction represented by the formula (1) occurs.

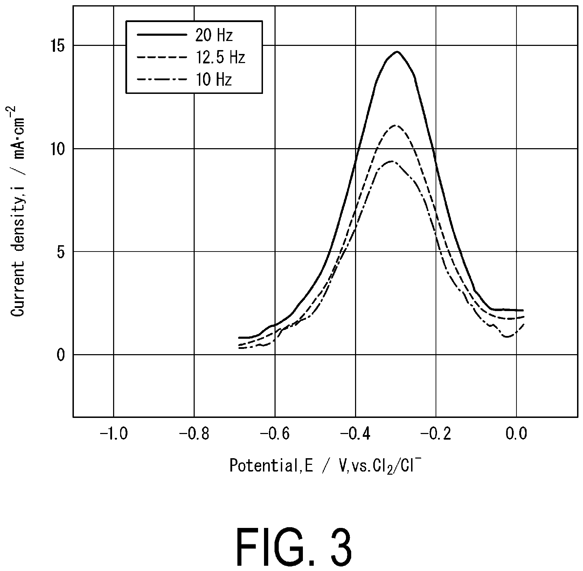

FIG. 3 shows the resulting square wave voltammogram.

From the results shown in FIGS. 2 and 3, it was found that the potential of the LiCl-KCl molten salt containing TiCl₃ was -0.3 V vs. Cl₂/Cl⁻.

### Example 2

### Measurement of cyclic voltammetry

A LiCl-KCl molten salt containing 0.3 mol/L of TiCl₃ was placed in an electrode cell.

A graphite electrode was used as a working electrode, an Ag⁺/Ag electrode was used as a reference electrode for conversion in terms of chlorine evolution, and a graphite electrode was used as a counter electrode.

The working electrode, the reference electrode, and the counter electrode were connected to a potentiostat device, the working electrode, the reference electrode, and the counter electrode were immersed in the LiCl-KCl molten salt containing TiCl₃, the potential was increased and decreased at a sweep rate of 200 mV/s to 400 mV/s, and the current value was measured.

The temperature of the LiCl-KCl molten salt containing TiCl₃ during the measurement was set to 450°C.

In this measurement, an electron reaction represented by the formula (2) and an electron reaction represented by the following formula (3) occurs.

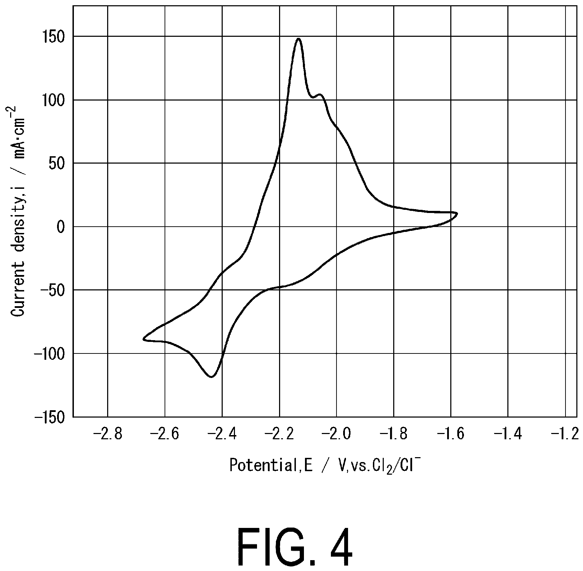

FIG. 4 shows the resulting cyclic voltammogram.

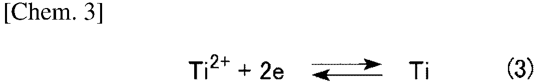

### Measurement of square wave voltammetry

The potential was swept in a square wave form at the working electrode to measure the response current, and the electrode reaction occurring was analyzed on the basis of the potential and the current.

The temperature of the LiCl-KCl molten salt containing TiCl₃ during the measurement was set to 450°C.

In this measurement, an electron reaction represented by the formula (2) and an electron reaction represented by the formula (3) occur.

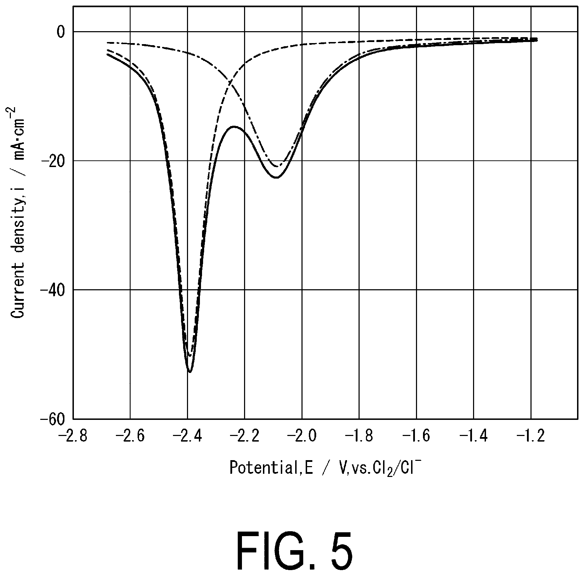

FIG. 5 shows the resulting square wave voltammogram.

From the results shown in FIGS. 4 and 5, it was found that the potential of the LiCl-KCl molten salt containing TiCl₃ was -2.1 V in the electron reaction represented by the formula (2) and -2.4 V in the electron reaction represented by the formula (3).

Therefore, it was found that a redox flow battery including the electrode cell of Example 1 as a positive electrode cell and the electrode cell of Example 2 as a negative electrode cell has an electromotive force of 1.8 V.

### Example 3

### Measurement of charge-discharge capacity

A LiCl-KCl molten salt containing 0.3 mol/L of TiCl₃ was placed in an electrode cell.

An electrode made of carbon fiber cloth was used as a positive electrode current collector, and a crucible graphite electrode was used as a negative electrode current collector.

The positive electrode and the negative electrode were immersed in the LiCl-KCl molten salt containing TiCl₃, and the charge capacity and the discharge capacity were measured with increasing and decreasing the voltage at a current density of 10 mA/cm². The electrodes were charged to 2 V and discharged to 1.1 V.

The temperature of the LiCl-KCl molten salt containing TiCl₃ during the measurement was set to 450°C.

In this measurement, the electron reaction represented by the formula (1) occurs.

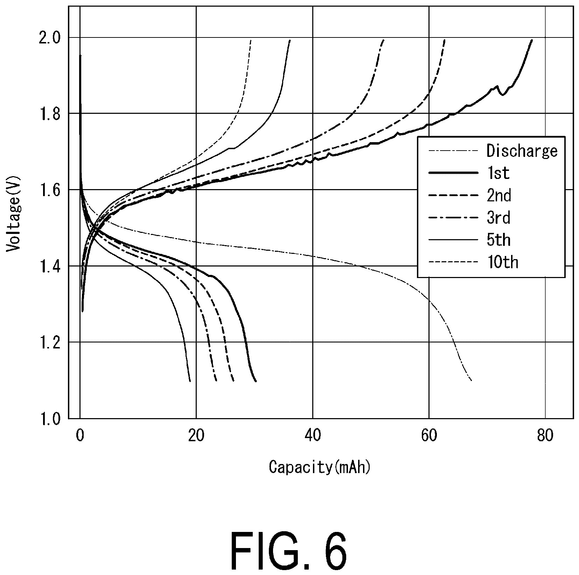

FIG. 6 shows the resulting charge-discharge curves.

From the results shown in FIG. 6, it was found that the charge curve and the discharge curve are substantially reversed.

### Example 4

### Measurement of charge-discharge capacity

A LiCl-KCl molten salt containing 0.3 mol/L of TiCl₃ was placed in an electrode cell.

An electrode made of carbon fiber cloth was used as a working electrode, and a crucible graphite electrode was used as a negative electrode current collector. The positive electrode and the negative electrode were immersed in the LiCl-KCl molten salt containing TiCl₃, and the charge capacity and the discharge capacity were measured with increasing and decreasing the voltage at a current density of 10 mA/cm². The electrodes were charged to 1.8 V and discharged to 1.2 V.

The temperature of the LiCl-KCl molten salt containing TiCl₃ during the measurement was set to 450°C.

In this measurement, the electron reaction represented by the formula (2) occurs.

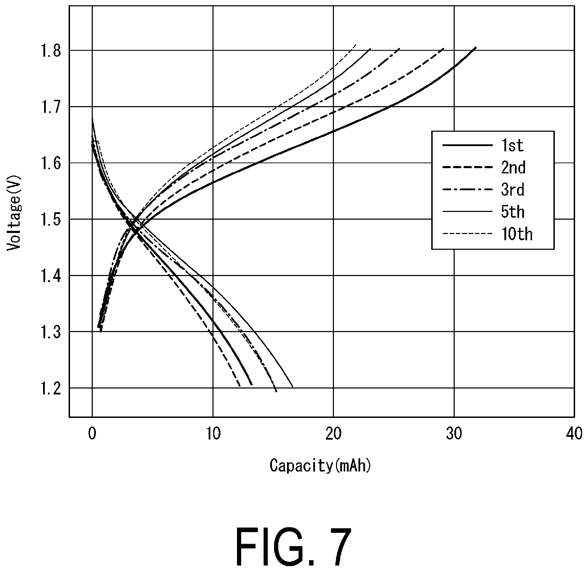

FIG. 7 shows the resulting charge-discharge curves.

From the results shown in FIG. 7, it was found that the charge curve and the discharge curve are substantially reversed.

### Example 5

A redox flow battery including the electrode cell of Example 3 as a positive electrode cell, the electrode cell of Example 4 as a negative electrode cell, and a diaphragm made of magnesium oxide and interposed between the positive electrode cell and the negative electrode cell was produced.

The electrodes in the positive electrode cell and the negative electrode cell were connected to an electrochemical measurement device, the electrodes in the positive electrode cell and the negative electrode cell were immersed in the LiCl-KCl molten salt containing TiCl₃, and the charge capacity and the discharge capacity were measured with increasing and decreasing the voltage at a current density of 10 mA/cm². The electrodes were charged to 2 V and discharged to 1.1 V.

The temperature of the LiCl-KCl molten salt containing TiCl₃ during the measurement was set to 450°C.

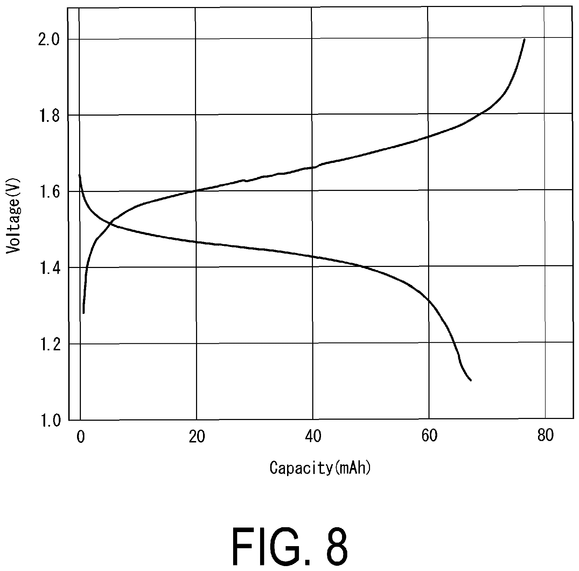

FIG. 8 shows the resulting charge-discharge curves.

From the results shown in FIG. 8, it was found that the charge curve and the discharge curve are substantially reversed.

### Comparative Example

### Measurement of charge-discharge capacity

A battery cell including a positive electrode cell having a positive electrode, a negative electrode cell having a negative electrode, and a diaphragm interposed between the positive electrode cell and the negative electrode cell was produced.

In the positive electrode cell and the negative electrode cell, a 2 mol/L aqueous sulfuric acid solution containing 1 mol/L vanadyl sulfate (VOSO₄) was placed.

An electrode made of a graphite rod having a diameter of 10 mm was used as the positive electrode, and an electrode made of a graphite crucible having a diameter of 50 mm was used as the negative electrode.

The positive electrode and the negative electrode were connected to an electrochemical measurement device, the positive electrode and the negative electrode were immersed in the aqueous sulfuric acid solution, and the charge capacity and the discharge capacity were measured with increasing and decreasing the voltage at a current density of 10 mA/cm². The electrodes were charged to 1.7 V and discharged to 0.7 V.

The temperature of the aqueous sulfuric acid solution during the measurement was set to 20°C.

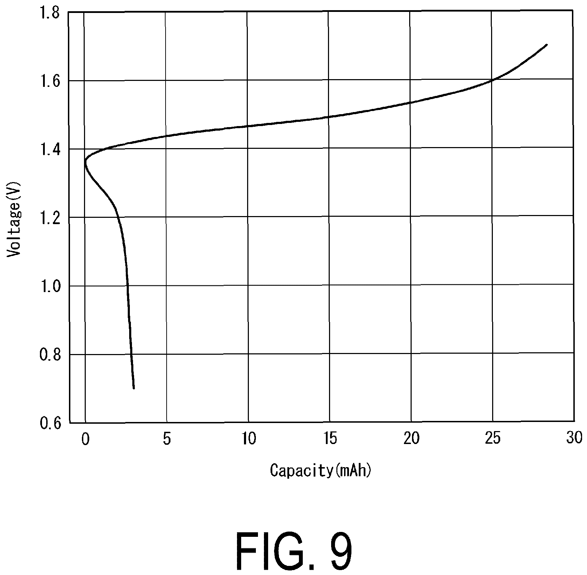

FIG. 9 shows the resulting charge-discharge curves.

From the results shown in FIG. 9, it was found that the charge curve and the discharge curve are not reversed.

### Example 6

### Measurement of charge-discharge capacity

A battery cell including a positive electrode cell having a positive electrode, a negative electrode cell having a negative electrode, and a diaphragm interposed between the positive electrode cell and the negative electrode cell was produced.

A LiCl-KCl molten salt containing 0.5 mol/L of TiCl₃ was placed in the negative electrode cell. A LiCl-KCl molten salt containing 0.5 mol/L of TiCl₂ was placed in the positive electrode cell.

An electrode made of a graphite net having a diameter of 10 mm and a graphite rod having a diameter of 10 mm was used as the positive electrode, and an electrode made of a graphite crucible having a diameter of 50 mm was used as the negative electrode.

The positive electrode and the negative electrode were connected to an electrochemical measurement device, the positive electrode was immersed in the LiCl-KCl molten salt containing 0.5 mol/L of TiCl₂, the negative electrode was immersed in the LiCl-KCl molten salt containing 0.5 mol/L of TiCl₃, and the charge capacity and the discharge capacity were measured with increasing and decreasing the voltage at a current density of 40 mA/cm³. The electrodes were charged to 1.7 V and discharged to 0.5 V.

The temperature of the molten salts during the measurement was set to 450°C.

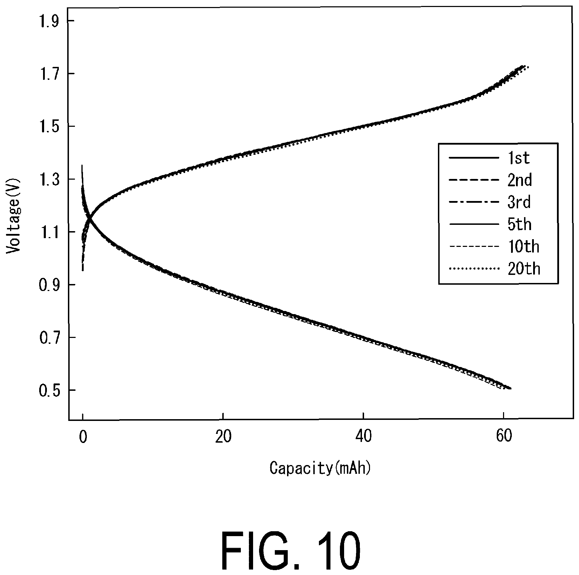

FIG. 10 shows the resulting charge-discharge curves.

From the results shown in FIG. 10, it was found that the charge curve and the discharge curve are substantially reversed. In addition, even when charge and discharge were repeated, the charge capacity and the discharge capacity decayed little, and it was found that the battery cell was excellent in cycle characteristics.

### Example 7

### Measurement of charge-discharge capacity

A battery cell including a positive electrode cell having a positive electrode, a negative electrode cell having a negative electrode, and a diaphragm interposed between the positive electrode cell and the negative electrode cell was produced.

A LiCl-KCl molten salt containing 1.5 mol/L of TiCl₃ was placed in the negative electrode cell. A LiCl-KCl molten salt containing 1.5 mol/L of TiCl₂ was placed in the positive electrode cell.

An electrode made of a graphite net having a diameter of 10 mm and a graphite rod having a diameter of 10 mm was used as the positive electrode, and an electrode made of a graphite crucible having a diameter of 50 mm was used as the negative electrode.

The positive electrode and the negative electrode were connected to an electrochemical measurement device, the positive electrode was immersed in the LiCl-KCl molten salt containing 1.5 mol/L of TiCl₂, the negative electrode was immersed in the LiCl-KCl molten salt containing 1.5 mol/L of TiCl₃, and the charge capacity and the discharge capacity were measured with increasing and decreasing the voltage at a current density of 10 mA/cm³. The electrodes were charged to 1.8 V and discharged to 0.5 V.

The temperature of the molten salts during the measurement was set to 400°C.

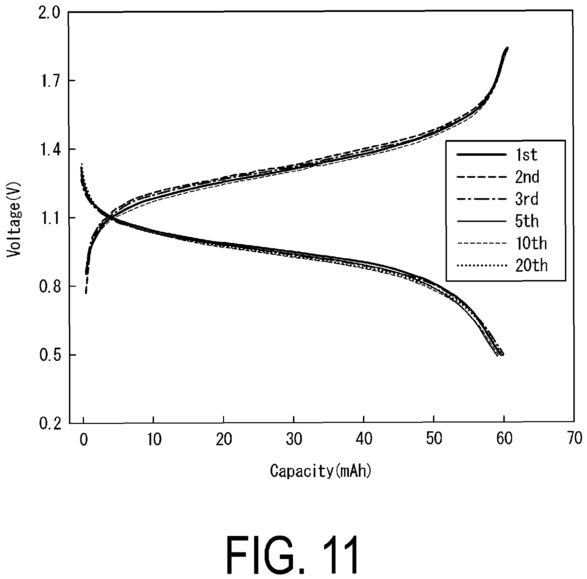

FIG. 11 shows the resulting charge-discharge curves.

From the results shown in FIG. 11, it was found that the charge curve and the discharge curve are substantially reversed. In addition, even when charge and discharge were repeated, the charge capacity and the discharge capacity decayed little, and it was found that the battery cell was excellent in cycle characteristics.

### Example 8

### Measurement of charge-discharge capacity

A battery cell including a positive electrode cell having a positive electrode, a negative electrode cell having a negative electrode, and a diaphragm interposed between the positive electrode cell and the negative electrode cell was produced.

A NaCl-KCl-MgCl₂ molten salt containing 1.5 mol/L of TiCl₃ was placed in the negative electrode cell. A NaCl-KCl-MgCl₂ molten salt containing 1.5 mol/L of TiCl₂ was placed in the positive electrode cell.

An electrode made of a graphite net having a diameter of 10 mm and a graphite rod having a diameter of 10 mm was used as the positive electrode, and an electrode made of a graphite crucible having a diameter of 50 mm was used as the negative electrode.

The positive electrode and the negative electrode were connected to an electrochemical measurement device, the positive electrode was immersed in the NaCl-KCl-MgCl₂ molten salt containing 1.5 mol/L of TiCl₂, the negative electrode was immersed in the NaCl-KCl-MgCl₂ molten salt containing 1.5 mol/L of TiCl₃, and the charge capacity and the discharge capacity were measured with increasing and decreasing the voltage at a current density of 15 mA/cm³. The electrodes were charged to 2.0 V and discharged to 0.5 V.

The temperature of the molten salts during the measurement was set to 480°C.

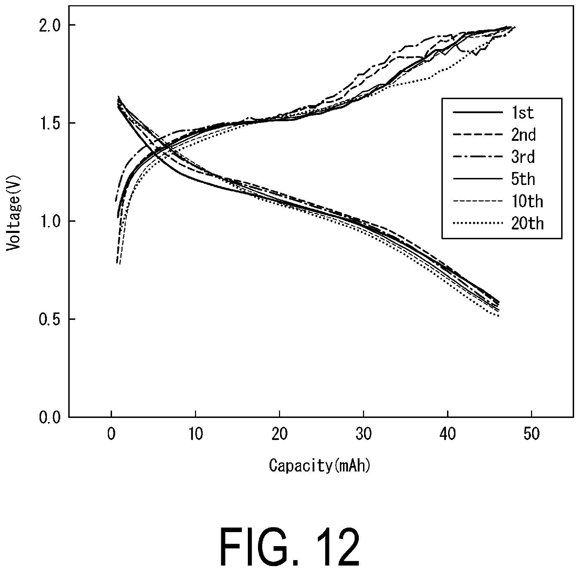

FIG. 12 shows the resulting charge-discharge curves.

From the results shown in FIG. 12, it was found that the charge curve and the discharge curve are substantially reversed. In addition, even when charge and discharge were repeated, the charge capacity and the discharge capacity decayed little, and it was found that the battery cell was excellent in cycle characteristics.

### Industrial Applicability

With use of the redox flow battery of the present invention, a large-capacity storage battery system suitable for ultra-large-scale power generation can be created as a storage battery system for power generation using renewable energy.

### Reference Signs List

100 Redox flow battery
101 Diaphragm
102 Positive electrode cell
103 Negative electrode cell
104 Positive electrode
105 Negative electrode
106 Positive electrode electrolyte tank
107 Negative electrode electrolyte tank
108, 109, 110, 111 Pipe
112, 113 Pump

## Claims

1. A redox flow battery that is charged and discharged by supply of a positive electrode electrolyte and a negative electrode electrolyte to a battery cell including a positive electrode, a negative electrode, and a diaphragm interposed between the positive electrode and the negative electrode, wherein:
the positive electrode electrolyte and the negative electrode electrolyte are molten salts,
the positive electrode electrolyte contains a trivalent titanium ion and a tetravalent titanium ion, and
the negative electrode electrolyte contains a divalent titanium ion and a trivalent titanium ion.

2. The redox flow battery according to claim 1, wherein each of the molten salts is a molten salt of lithium chloride and potassium chloride, a molten salt of sodium chloride and potassium chloride, a molten salt of magnesium chloride, sodium chloride, and potassium chloride, or a molten salt of lithium fluoride, sodium fluoride, and potassium fluoride.
